(19) Europäisches Patentamt

European Patent Office

Office européen des brevets

(11) **EP 1 049 105 A1**

(12) **EUROPEAN PATENT APPLICATION**
published in accordance with Art. 158(3) EPC

(43) Date of publication:
**02.11.2000 Bulletin 2000/44**

(51) Int. Cl.⁷: **G21C 3/30**, G21C 3/62,
G21C 3/32, G21C 3/16

(21) Application number: **98944233.0**

(22) Date of filing: **25.09.1998**

(86) International application number:
**PCT/JP98/04296**

(87) International publication number:
**WO 00/19448 (06.04.2000 Gazette 2000/14)**

(84) Designated Contracting States:
**DE FR GB**

(71) Applicant: **Hitachi, Ltd.**
**Chiyoda-ku, Tokyo 101-8010 (JP)**

(72) Inventors:
• **KOYAMA, Junichi**
**Hitachi-shi Ibaraki 319-1222 (JP)**
• **IRUBE, Makoto**
**Hitachinaka-shi Ibaraki 312-0041 (JP)**

• **TOKUNAGA, Kensuke**
**Takahagi-shi Ibaraki 318-0022 (JP)**

(74) Representative:
**Paget, Hugh Charles Edward et al**
**MEWBURN ELLIS**
**York House**
**23 Kingsway**
**London WC2B 6HP (GB)**

(54) **FUEL ASSEMBLY**

(57)    The present invention concerns a fuel assembly loaded in a boiling water type reactor. An object of the present invention is to provide a fuel assembly capable of increasing the uranium weight per one fuel assembly and increasing the fuel active length than usual while keeping the integrity of the fuel rod.

An invention for attaining the foregoing object provides a fuel assembly in which uranium fuel rods each having first pellets with uranium dioxide and without gadolinia and burnable poison-containing fuel rods each having second pellets with uranium dioxide and gadolinia are arranged in a lattice array of 9-rows/9-columns, wherein all fuel rods have an identical length, and the following relations are established between the plenum length ratio P in the uranium fuel rod and the relative density D of the first pellets and the fuel active length of the burnable poison-containing fuel rod is equal to or less than fuel active length of the uranium fuel rod: $P < 0.086$, $D < 1.0$, $D > 1.22 - 10P/3$, $D > 0.897/(1-P)$.

FIG.1

EP 1 049 105 A1

## Description

TECHNICAL FIELD

The present invention concerns a fuel assembly loaded in a boiling water reactor (BWR).

BACKGROUND ART

A fuel assembly for use in BWR comprises a plurality of fuel rods having fuel pellets containing fissile materials sealed therein, an upper tie plate and a lower tie plate for supporting upper and lower portions of the fuel rod and spacers for keeping a distance between fuel rods.

With a view point of effective utilization of uranium resources and reduction in the number of spent fuel assemblies, it has been demanded for increasing the energy generated per one fuel assembly. For this purpose, it is desirable for high burnup for increasing the energy generated per unit fuel weight and increasing the uranium weight per one fuel assembly. For high burnup, it is necessary to increase the average enrichment of uranium 235 in the fuel assembly (hereinafter simply referred to as average enrichment).

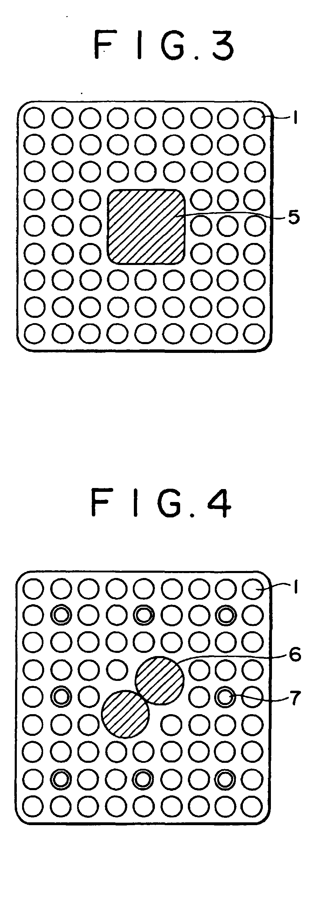

Fig. 3 shows a first existent embodiment described in Japanese Patent Laid-open No. Sho 64-91088 and a literature "On $9 \times 9$ fuels in BWR", NLR-15, published in April, 1994 (hereinafter referred to as a first literature). The figure shows a transversal cross section of the fuel assembly of the first existent embodiment. In this fuel assembly, a water channel 5 in which coolants flow is disposed in a region at a central area in which nine fuel rods 1 can be arranged, as a countermeasure for the increase of the average enrichment.

Fig. 4 shows a second existent embodiment described in the literature "On $9 \times 9$ fuels in a BWR type nuclear power plant", HLR-048 revised edition 1, published in February 1998 (hereinafter referred to as a second literature). The figure shows a transversal cross section of the fuel assembly of the second existent embodiment. In this fuel assembly, two large water rods 6 are disposed in a region at a central area in which 7 fuel rods 1 can be arranged and short-length fuel rods 7 shorter than other fuel rods (long-length fuel rods) 1 are arranged by the number of eight.

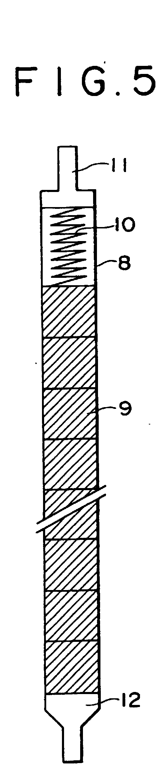

The structure of the fuel rod is to be explained with reference to Fig. 5. The figure is a schematic longitudinal cross sectional view of a fuel rod. This fuel rod has a structure in which fuel pellets 9 are stacked in a fuel cladding tube 8, and tightly sealed by an upper end plug 11 and a lower end plug 12 while retaining the same by a spring 10. The length for the portion in which the fuel pellets are filled is referred to as a fuel active length and a space in which the spring is contained is referred to as a plenum. The plenum is disposed for keeping the inner pressure in the fuel rod within an allowable range when gaseous nuclear fission products (FP gases) formed by nuclear fission reaction are released from the pellets.

A thermal margin tends to decrease along with increase of the enrichment of uranium 235 (hereinafter simply referred to as enrichment). Accordingly, it is desirable to increase the length of the heat generating portion of the fuel rod in view of the thermal margin. Then, the fuel assembly in Fig. 3 and the fuel assembly in Fig. 4 are compared with reference to the laid-open literature.

Since, the fuel assembly in Fig. 3 has fuel rods each having a pellet diameter of 0.94 cm and a fuel active length of 371 cm by the number of 72, the entire fuel active length is about 267 m and the total volume of the fuel pellets is 18540 cm$^3$. The fuel assembly shown in Fig. 4 has long-length fuel rods each having a pellet diameter of 0.96 cm and a fuel active length of 371 cm by the number of 66 and short-length fuel rods each having a fuel active length of 216 cm by the number of 8. That is, the entire fuel active length is about 262 m and the total volume of the fuel pellet is about 18970 cm$^3$.

In the fuel assembly of Fig. 4, a flow channel area in a 2-phase flow region in an upper portion of a fuel assembly where the pressure loss ratio is higher is enlarged by using the short-length fuel rods. This increases the pellet diameter without increasing the total pressure loss. Accordingly, while the entire fuel active length is shorter compared with that of Fig. 3, the total volume of the fuel pellets is larger and the uranium weight is increased compared with that of Fig. 3. On the other hand, since the entire fuel active length of the fuel assembly in Fig. 3 is longer than that of Fig. 4, the average linear heat generation ratio defined by (thermal power of fuel assembly/entire fuel active length) is lower by about 2% compared with that of Fig. 4.

When the length of the heat generating portion of the fuel rod is increased, the entire fuel active length can be increased by increasing the length of the short-length fuel rod in the fuel assembly shown in Fig. 4. On the contrary, in the fuel assembly shown in Fig. 3, it is necessary to increase the fuel active length in the fuel rods because all fuel rods have an identical length. However, when the fuel active length is increased further, this results in a problem that the inner pressure of the fuel rod increases at high exposure. That is, since the entire length of the fuel rod is generally determined depending on the core structure of the nuclear reactor, the plenum length is made shorter by so much as the fuel active length in the fuel rod is made longer. As the plenum length is shortened, increase of the inner pressure of the fuel rod due to FP gases generated by nuclear fission becomes stringent.

As the prior art for suppressing the increase of the inner pressure by the FP gases, Japanese Patent Laid-open No. Hei 6-342090 discloses a technique of using hollow pellets. Further, Japanese Patent Laid-open No. Hei 6-94876 describes reduction of FP gas charges by the use of fuel pellets with large grain size (large grain size pellet).

In the technique of using the hollow pellets described in Japanese Patent Laid-open No. Hei 6-342090, uranium weight per one fuel assembly is decreased. When the uranium weight per one fuel assembly is decreased, the energy generated per one fuel assembly is decreased even for an identical discharge exposure, which is not preferred. The large grain size pellets described in Japanese Patent Laid-open No. Hei 6-94876 is a prospective technique but it is still in the course of development and has not yet reached a commercial production stage.

DISCLOSURE OF INVENTION

An object of the present invention is to provide a fuel assembly capable of increasing the uranium weight per one fuel assembly and increasing the fuel active length than usual while keeping the integrity of the fuel rod.

A first invention for attaining the foregoing object provides a fuel assembly in which a plurality of fuel rods each having pellets with uranium dioxide are arranged in a square lattice array of 9-rows/9-columns, wherein all fuel rods have an identical length, and the following relations of equation 1 to equation 4 are established between the ratio P of the plenum length relative to the sum of the fuel active length and the plenum length in the fuel rod (hereinafter referred to as a plenum length ratio) and the ratio D of the pellet density of the pellets relative to the theoretical density (hereinafter referred to as a relative density):

$$P < 0.086 \qquad \text{(Equation 1)}$$

$$D < 1.0 \qquad \text{(Equation 2)}$$

$$D > 1.22 - 10P/3 \qquad \text{(Equation 3)}$$

$$D > 0.897/(1-P) \qquad \text{(Equation 4)}$$

The second invention provides a fuel assembly in which uranium fuel rods each having first pellets with uranium dioxide and without gadolinia and burnable poison-containing fuel rods each having second pellets with uranium dioxide and gadolinia are arranged in a square lattice array of 9-rows/9-columns, wherein all fuel rods have an identical length, and the relations of equation 1 to equation 4 are established between the plenum length ratio P of the uranium fuel rod and the relative density D of the first pellets, and the fuel active length of the burnable poison-containing fuel rod is equal to or less than the fuel active length of the uranium fuel rod.

The third invention provides a fuel assembly in which a plurality of fuel rods each having pellets with uranium dioxide are arranged in a square lattice array of 9-rows/9-columns, wherein all fuel rods have an identical length, and the relations of equation 2, equation 3 and equation 5 are established between the plenum length ratio P of the fuel rod and the relative density D of the pellets:

$$D < 1.0 \qquad \text{(Equation 2)}$$

$$D > 1.22 - 10P/3 \qquad \text{(Equation 3)}$$

$$P < 0.075 \qquad \text{(Equation 5)}$$

The fourth invention provides a fuel assembly in which uranium fuel rods each having first pellets with uranium dioxide and without gadolinia and burnable poison-containing fuel rods each having second pellets with uranium dioxide and gadolinia are arranged in a lattice array of 9-rows/9-columns, wherein all fuel rods have an identical length, and the relations of equation 2, equation 3 and equation 5 are established between the plenum length ratio P of the uranium fuel rod and the relative density D of the first pellets, and the fuel active length of the burnable poison-containing fuel rod is equal to or less than the fuel active length of the uranium fuel rod.

In the first to fourth inventions, the condition that all fuel rods have an identical length may be replaced with the condition that the sum of the fuel active length and the plenum length is equal for all fuel rods.

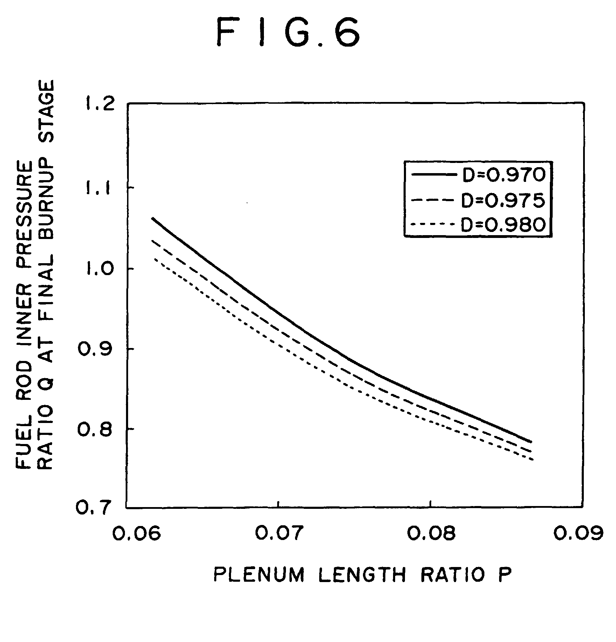

The operation of the present invention is to be explained. As described above, the inner pressure of the fuel rod at the final burnup stage of the fuel assembly increases by the decrease of the plenum length due to increase in the fuel active length. Fig. 6 shows a result of analysis for determining a relation between the fuel active length and the inner pressure of the fuel rod in the fuel assembly shown in Fig. 3 under the condition that the sum of the fuel active length and the plenum length is constant. In this case, the maximum burnup of the pellets attainable is defined as 75 GWd/t which is identical with the condition described in the second literature. In Fig. 6, the abscissa indicates the plenum length ratio P and the ordinate indicates a ratio Q of the inner pressure in a fuel rod relative to a coolant pressure outside of the fuel rod at the final burnup stage of the fuel assembly (hereinafter referred to as fuel rod inner pressure ratio).

Since the fuel assemblies shown in Fig. 3 and Fig. 4 have identical fuel active length, the plenum length is also considered to be identical as 35 cm in the second literature. In this case, the plenum length ratio P is 0.086. At the relative density: D = 0.97 for the pellets, the fuel rod inner pressure Q is about 0.8 in view of Fig. 6. This fuel rod inner pressure ratio is a favorable state for the integrity of the fuel rod. However, when the fuel active length is increased and the plenum length ratio P is decreased to 0.075 in Fig. 6, the fuel rod inner pressure ratio Q approaches about 0.9. It has been found that the fuel rod inner pressure ratio Q increases to 1 or greater if P is 0.065 or less. That is, it has been found that the inner pressure of the fuel rod may be higher than the coolant pressure when P is 0.065 or less.

Since the role of the fuel rod is to seal the radioactive materials, it is not desired that the inner pressure of the fuel rod is higher than the coolant pressure at the outside. In the result of the actual design concerning existent BWR fuels, the maximum value for the fuel rod inner pressure ratio Q was about 0.9. When the fuel rod inner pressure ratio Q is limited to 0.9 or less so as to be included within the range of the existent result while ensuring 10% design margin, the plenum length ratio P = 0.075 is an upper limit for the fuel active length.

The present inventors have found that the fuel rod inner pressure ratio Q can be decreased to 0.9 or less by increasing the pellet density of fuel pellets even in a case of increasing the fuel active length to P < 0.075. That is, since the thermal conductivity of the pellet is increased due to the increase of the pellet density, the pellet temperature is lowered. It has been found that the lower temperature decreases the amount of FP gas release, then the inner pressure of the fuel rod can be lowered effectively.

It has been known so far that the thermal conductivity is increased by the increase of the pellet density. However, it has not been known so far how much the increase of the thermal conductivity of the pellets acts on the lowering of the fuel rod inner pressure.

The present inventors have conducted quantitative analysis using the pellet density as a parameter to obtain the result shown in Fig. 6. That is, the relation between the plenum length ratio P and the fuel rod inner pressure ratio Q has been determined at three relative densities D. It has been found from the result of this analysis that the fuel rod inner pressure can be decreased by 3 to 4% by increasing the pellet density by 1%. It has further been found that the effect of lowering the fuel rod inner pressure by the increase of the pellet density is enhanced as the plenum length ratio P is smaller.

Based on this result, it can be seen that increase of the pellet density is effective as a countermeasure for lowering the fuel rod inner pressure when the plenum length ratio P is decreased to increase the fuel active length. The uranium weight is increased as the pellet density is higher for pellets of an identical volume. Accordingly, it has formed shown that simultaneous increase of the fuel active length and the pellet density is suitable to the purpose of the present invention.

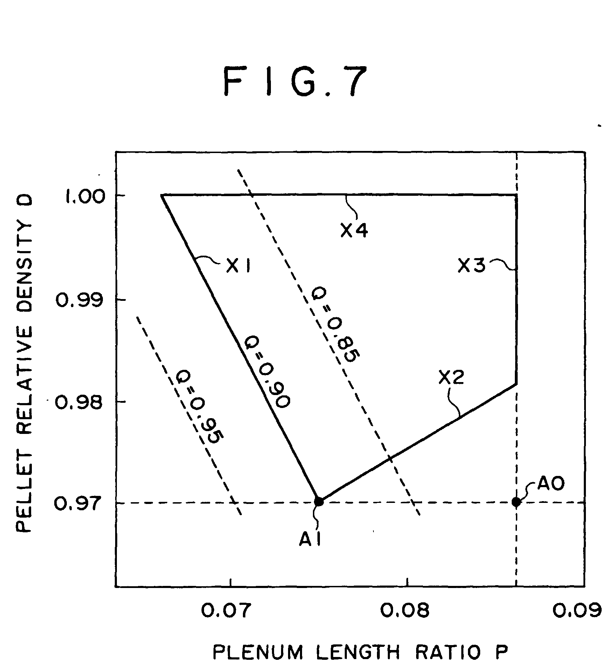

Fig. 7 is a view showing the arrangement for the relation of making the fuel rod inner pressure ratio Q constant, in which the abscissa indicates the plenum length ratio P and the ordinate indicates the relative density D of the pellets. As shown in the figure, when the fuel rod inner pressure ratio Q is 0.9 or less, the plenum length ratio P can be shortened to 0.075 at the usual relative density; D = 0.97.

In the region: P < 0.075, it is necessary to increase the relative density D in accordance with the decrease of the plenum length ratio P along solid line X1 for Q = 0.90 in Fig. 7. It has been found that the solid line X1 can be expressed as: D = 1.22 - 10P/3. Fig. 7 also shows broken lines corresponding to Q = 0.85, 0.95.

On the other hand, the design point A1 for making the fuel active length longest in a range satisfying the fuel rod inner pressure ratio Q of 0.9 or less while keeping the existent relative density: D = 0.97 corresponds to P = 0.075 and D = 0.97. At the design point A1, the uranium weight can be increased by about 1.2% compared with the design point A0 for the fuel assembly shown in Fig. 3 (P = 0.086, D = 0.97). That is, within a range on the extension of the prior art, the increase of the uranium weight remains within 1.2%.

On the contrary, in the present invention, the uranium weight can be increased by 1.2% or more by increasing the fuel active length and the pellet density simultaneously. Also in a case where the fuel active length is shorter than P = 0.075, the uranium weight can be increased while lowering the fuel rod inner pressure by making the pellet density higher.

A range capable of increasing the uranium weight than the design point A1 as the extension of the prior art can be expressed as D > 0.897/(1-P). The boundary line: D = 0.897/(1-P) is shown by solid line X2 in Fig. 7.

As described in the first literature, the relative density of the pellet used in the up-to-date fuel assembly is about 0.97. However, as described in Japanese Patent Laid-open No. Hei 5-45483, the pellet density can further be increased by designing the manufacturing method. However, it is difficult to make the average pellet density equal with the theoretical density because of the scattering during sintering of the fuel pellets. Accordingly, the targeted pellet density of the present invention is within a range: D < 1.0. The boundary line: D = 1.0 is shown by solid line X4 in Fig. 7.

Further, since the object of the present invention is to increase the fuel active length, the plenum length ratio P is made shorter than the existent design in Fig. 3. The condition is expressed as: P < 0.086. The boundary line: P = 0.086 is shown by solid line X3 in Fig. 7.

A region surrounded with the solid lines X1 to X4 in Fig. 7 corresponds to a region satisfying the conditions of equation 1 to equation 4. Accordingly, the uranium weight per one fuel assembly can be increased and the fuel active length can be increased exceeding the range of the prior art by adopting the design point in the region satisfying the conditions of equation 1 to equation 4. Further, since the fuel rod inner pressure ratio can be lowered to 0.9 or less, the integrity of the fuel rod can also be maintained.

Further, a region surrounded with the solid lines X1 and X4 and P = 0.075 (not shown) in Fig. 7 corresponds to a region satisfying the conditions of equation 2, equation 3 and equation 5. By adopting the design point within the region, the fuel active length can further be made longer and the thermal margin can also be improved.

Then, a fuel assembly having gadolinia-containing fuel rods (Gd-fuel rods) used for the reactivity control is to be explained. It has been known that a fuel pellet containing gadolinia as a burnable poison has lower thermal conductivity compared with a fuel pellet not containing gadolinia. The difference in the thermal conductivity varies depending on gadolinia concentration. Therefore, comparing the uranium fuel rod (U-fuel rod) not containing gadolinia with the Gd-fuel rod, it is necessary that the plenum length ratio of the Gd-fuel rod is equal to or greater than the plenum length ratio of the U-fuel rod.

BRIEF DESCRIPTION OF DRAWINGS

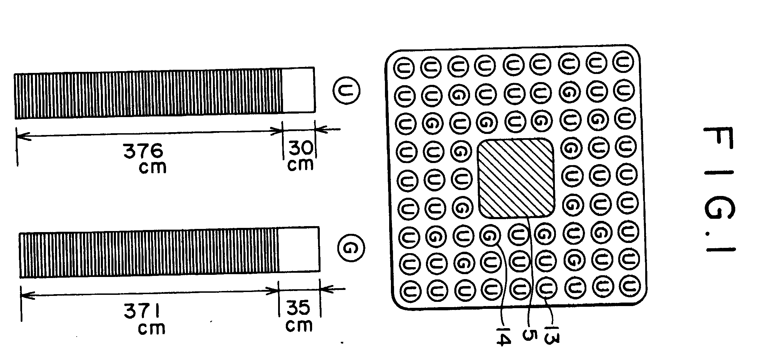

Fig. 1 is a transversal cross sectional view for a first embodiment of a fuel assembly according to the present invention and a view showing a fuel active length and a plenum length of a fuel rod.

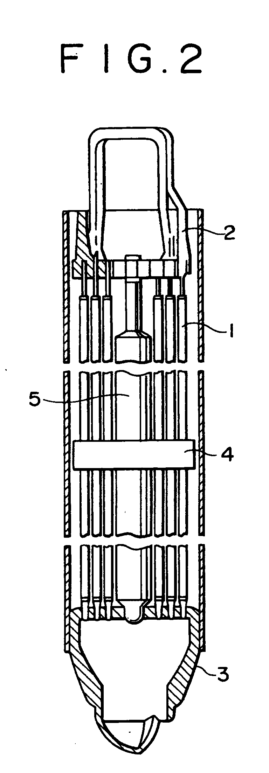

Fig. 2 is a schematic longitudinal cross sectional view of the first embodiment.
Fig. 3 is a view showing a transversal cross section of a first existent fuel assembly.
Fig. 4 is a view showing a transversal cross section of a second existent fuel assembly.
Fig. 5 is a schematic longitudinal cross sectional view of a fuel assembly.
Fig. 6 is a view showing a relation between a plenum length ratio and a fuel rod inner pressure ratio.
Fig. 7 is a view showing a relation between a plenum length ratio and a relative density of pellets of a fuel assembly according to the present invention.

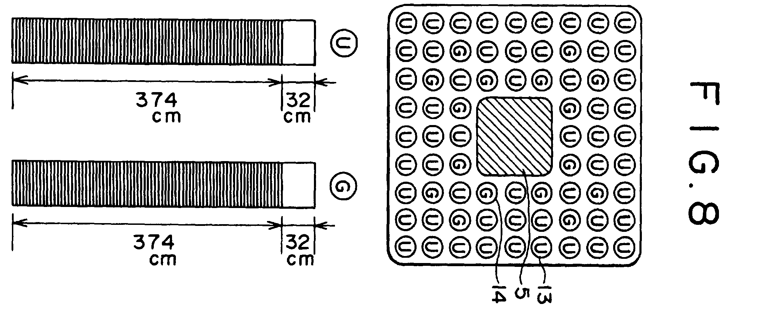

Fig. 8 is a transversal cross sectional view for a second embodiment of a fuel assembly according to the present invention and a view showing a fuel active length and a plenum length of a fuel rod.

BEST MODE FOR CARRYING OUT THE INVENTION

(Example 1)

A first embodiment of the fuel assembly according to the present invention is to be explained with reference to Fig. 1 and Fig. 2. Fig. 1 is a transversal cross sectional view of a fuel assembly of a first embodiment and a fuel active length and a plenum length of a fuel rod. Fig. 2 is a schematic longitudinal cross sectional view of the first embodiment. As shown in Fig. 2, this fuel assembly comprises a plurality of fuel rods 1 having fuel pellets containing uranium fuels as a fissile material sealed therein, a water channel 5 in which water flows, an upper tie plate 2 and a lower tie plate 3 supporting an upper end and a lower end of the fuel rod 1, and a spacer 4 for supporting a distance between the fuel rods 1.

As shown in Fig. 1, in the fuel assembly, fuel rods are arranged in a square lattice array of 9-rows/9-columns, and the water channel 5 is disposed in a region at a central area where nine fuel rods can be arranged. The transversal cross section of the water channel 5 is generally of a square shape. The structure of the fuel rod is identical with that of Fig. 5. That is, the fuel rod has a structure of retaining fuel pellets filled in a fuel cladding tube with a spring and tightly sealed by an upper end plug and a lower end plug.

The fuel rods comprise uranium fuel rods (U-fuel rods) 13 and gadolinia-containing fuel rods (Gd-fuel rods) 14. The U-fuel rods 13 are loaded by the number of 56 and the Gd-fuel rods are loaded by the number of 16. Among them, Gd-fuel rods 14 are arranged in the second layer from the outside at the position adjacent with four corners. Remaining eight Gd-fuel rods 14 are arranged in the third layer from the outside adjacent with four corners.

The U-fuel rod 13 has first pellets containing uranium dioxide and not containing gadolinia (burnable poisons) sealed therein. The Gd-fuel rod 14 has second pellet containing both of uranium dioxide and gadolinia sealed therein. The ratio D of the pellets density of the first pellet relative to the theoretical density (relative density) is 0.975.

All fuel rods have an identical length. That is, the U-fuel rod 13 and the Gd-fuel rod 14 are identical in the sum of the fuel active length and the plenum length, which is 406 cm. The U-fuel rod 13 has a fuel active length of 376 cm and the plenum length of 30 cm, in which the ratio of the plenum length to the sum of the fuel active length and the plenum length (plenum length ratio) P is 0.074. The Gd-fuel rod 14 has a fuel active length of 371 cm which is equal to or less than the fuel active length of the U-fuel rod 13.

In this embodiment:

$$P = 0.074 < 0.075 < 0.086,$$

$$D = 0.975 < 1.0$$

are established. Further:

$$1.22 - 10P/3 = 0.973 < D,$$

$$0.897/(1-P) = 0.969 < D$$

are established. That is, they satisfy relations of equation 1 to equation 5. Accordingly, uranium weight per one fuel assembly 1 can be increased and the fuel active length can also be longer than usual. Further, the fuel rod inner pressure ratio can be made to 0.9 or less to maintain the integrity of the fuel rod.

Then, the fuel active length and the uranium weight are compared with those of the existent fuel assembly in Fig. 3. The entire fuel active length in Fig. 3 is: 371 cm × 72 = 267 m. The entire fuel active length in this embodiment is 376 cm × 56 + 371 cm × 16 = 270 m. Accordingly, the entire fuel active length of this embodiment is made longer by about 1.1% compared with the entire fuel active length of Fig. 3. This can improve the thermal margin. Further, since the pellet density is increased by 0.5%, the uranium weight per one fuel assembly is increased by about 1.6% considering increase of the entire fuel active length of 1.1%.

(Example 2)

Then, a second embodiment for the fuel assembly according to the present invention is to be explained with reference to Fig. 8. Fig. 8 shows a transversal cross section of a fuel assembly of the second embodiment and a fuel active length and a plenum length of a fuel rod. The longitudinal cross sectional view of this fuel assembly is identical with that in Fig. 2. This embodiment is different from the first embodiment in the fuel active length and the pellet density of the fuel rod. Since other constitutions are identical with those in the first embodiment, the explanation therefor will be omitted.

In this embodiment, as shown in Fig. 8, the fuel active length and the plenum length are identical between the U-fuel rod 13 and Gd-fuel rod 14. That is, fuel active length is 374 cm and the plenum length is 32 cm. In this case, the ratio P of the plenum length relative to the sum of the fuel active length and the plenum length (plenum length ratio) is 0.079. Further, the ratio D of the pellet density of the first pellets loaded in the U-fuel rod 13 relative to the theoretical density (relative density) is 0.98.

In this embodiment:

$$P = 0.079 < 0.086,$$

$$D = 0.98 < 1.0$$

are established. Further:

$$1.22 - 10P/3 = 0.957 < D,$$

$$0.897/(1-P) = 0.974 < D$$

are established. That is, they satisfy relations of equation 1 to equation 4. Accordingly, uranium weight per one fuel assembly can be increased and the fuel active length can also be increased than usual. Further, the inner pressure ratio of the fuel rod can be made to 0.9 or less to maintain the integrity of the fuel rod.

The U-fuel rod of this embodiment has a shorter fuel active length and a longer plenum length, as well as has a higher pellet density compared with the U-fuel rod of the first embodiment. Accordingly, the fuel rod inner pressure at the final burnup stage of the U-fuel rod is lower in this embodiment than that in the first embodiment. Further, the uranium weight per one fuel assembly is increased by about 1.8% than that of the existent embodiment shown in Fig. 3 and increased by about 0.7% than that of the first embodiment.

In the foregoing embodiments, fuel assemblies containing U-fuel rods and Gd-fuel rods have been explained. As described above, the present invention is also applicable to fuel assemblies containing only the U-fuel rods. Also in this case, the same effects as described for the foregoing embodiments can be obtained by constituting such that the relations for equation 1 to equation 4 are satisfied.

**Claims**

1. A fuel assembly in which a plurality of fuel rods each having pellets with uranium dioxide in a square lattice array of 9-rows/9-columns, wherein all fuel rods have an identical, and the following relations are established between the ratio P of the plenum length relative to the sum of the fuel active length and the plenum length in the fuel rod and the ratio D of the pellet density of the pellets relative to the theoretical density:

$$P < 0.086,$$

$$D < 1.0,$$

$$D > 1.22 - 10P/3,$$

$$D > 0.897/(1-P).$$

2. A fuel assembly in which uranium fuel rods each having first pellets with uranium dioxide and without gadolinia and burnable poison-containing fuel rods each having second pellets with uranium dioxide and gadolinia are arranged in a lattice array of 9-rows/9-columns, wherein all fuel rods have an identical, and the following relations are established between the ratio P of the plenum length relative to the sum of the fuel active length and the plenum length in the uranium fuel rod and the ratio D of the pellet density of the first pellets relative to the theoretical density, and

the fuel active length of the burnable poison-containing fuel rod is equal to or less than the fuel active length of the uranium fuel rod:

P < 0.086,

D < 1.0,

D > 1.22 - 10P/3,

D > 0.897/(1-P).

3. A fuel assembly in which a plurality of fuel rods each having pellets with uranium dioxide in a square lattice array of 9-rows/9-columns, wherein all fuel rods have an identical length, and the following relations are established between the ratio P of the plenum length relative to the sum of the fuel active length and the plenum length in the fuel rod and the ratio D of the pellet density of the pellets relative to the theoretical density:

P < 0.075,

D < 1.0,

D > 1.22 - 10P/3.

4. A fuel assembly in which uranium fuel rods each having first pellets with uranium dioxide and without gadolinia and a burnable poison-containing fuel rods each having second pellets with uranium dioxide and gadolinia are arranged in a lattice array of 9-rows/9-columns, wherein all fuel rods have an identical length, and the following relations are established between the ratio P of the plenum length relative to the sum of the fuel active length and the plenum length in the fuel rod and the ratio D of the pellet density of the first pellets relative to the theoretical density, and

the fuel active length of the burnable poison-containing fuel rod is equal to or less than the fuel active length of the uranium fuel rod:

P < 0.075,

D < 1.0,

D > 1.22 - 10P/3.

5. A fuel assembly as defined in any one of claims 1 to 4, wherein a water channel having a generally square transverse cross sectional shape is disposed in a region of a central transversal cross sectional portion of the fuel assembly in which 9 fuel rods can be arranged.

# F I G . I

# FIG.2

# F I G. 3

# F I G. 4

# F I G . 5

# F I G . 6

# F I G. 7

# FIG. 8

EP 1 049 105 A1

# INTERNATIONAL SEARCH REPORT

International application No.

PCT/JP98/04296

A. CLASSIFICATION OF SUBJECT MATTER
Int.Cl⁶ G21C3/30, G21C3/62, G21C3/32

According to International Patent Classification (IPC) or to both national classification and IPC

B. FIELDS SEARCHED

Minimum documentation searched (classification system followed by classification symbols)
Int.Cl⁶ G21C3/30, G21C3/62, G21C3/32, G21C3/28

Documentation searched other than minimum documentation to the extent that such documents are included in the fields searched

| Jitsuyo Shinan Koho | 1940–1996 | Toroku Jitsuyo Shinan Koho | 1994–1998 |
| Kokai Jitsuyo Shinan Koho | 1971–1998 | Jitsuyo Shinan Toroku Koho | 1996–1998 |

Electronic data base consulted during the international search (name of data base and, where practicable, search terms used)
WPI/L, [G21C3/30*PLENUM*LENGTH]
JICST, [Kakunenryo Nenshodo*Mitudo*Nagasa]

C. DOCUMENTS CONSIDERED TO BE RELEVANT

| Category* | Citation of document, with indication, where appropriate, of the relevant passages | Relevant to claim No. |
|---|---|---|
| Y | JP, 01-201189, A (Nuclear Fuel Industrial Co., Ltd.), 14 August, 1989 (14. 08. 89), Full text ; Table 1 ; Figs. 1 to 9 (Family: none) | 1-5 |
| Y | JP, 2536372, B (Mitsubishi Materials Corp.), 8 July, 1996 (08. 07. 96), Full text ; Table 1 (Family: none) | 1-5 |
| Y | JP, 07-113672, B (Toshiba Corp.), 6 December, 1995 (06. 12. 95), Page 3, column 6, lines 2 to 9 (Family: none) | 2, 4 |
| A | JP, 2695407, B (Hitachi, Ltd.), 12 September, 1997 (12. 09. 97) (Family: none) | 1-4 |
| A | JP, 05-001912, B (Hitachi, Ltd.), 11 January, 1993 (11. 01. 93) (Family: none) | 1-4 |

☒ Further documents are listed in the continuation of Box C.  ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 29 October, 1998 (29. 10. 98) | Date of mailing of the international search report 10 November, 1998 (10. 11. 98) |
| Name and mailing address of the ISA/ Japanese Patent Office | Authorized officer |
| Facsimile No. | Telephone No. |

Form PCT/ISA/210 (second sheet) (July 1992)

15

## INTERNATIONAL SEARCH REPORT

International application No.

PCT/JP98/04296

C (Continuation). DOCUMENTS CONSIDERED TO BE RELEVANT

| Category* | Citation of document, with indication, where appropriate, of the relevant passages | Relevant to claim No. |
|---|---|---|
| A | JP, 05-346472, A (Toshiba Corp.), 27 December, 1993 (27. 12. 93) (Family: none) | 1-4 |
| A | JP, 05-045483, A (Nuclear Fuel Industrial Co., Ltd.), 23 February, 1993 (23. 02. 93) (Family: none) | 1-4 |

Form PCT/ISA/210 (continuation of second sheet) (July 1992)